# EUROPEAN PATENT APPLICATION

(11) **EP 4 296 547 A1**
(43) Date of publication of application: **27.12.2023**
(21) Application number: 22770174.5
(22) Date of filing: 14.01.2022
(51) Int. Cl.: F16K 1/02, F16K 1/226

(54) **ELECTRIC VALVE**

(30) Priority: 17.03.2021 CN 202110287924; 17.03.2021 CN 202120553724 U
(71) Applicant: Zhejiang Dunan Artificial Environment Co., Ltd., Shaoxing, Zhejiang 311835 (CN)
(72) Inventor: JIN, Ju, Shaoxing, Zhejiang 311835 (CN); WANG, Fugang, Shaoxing, Zhejiang 311835 (CN); ZHANG, Wenrong, Shaoxing, Zhejiang 311835 (CN); SONG, Zhiguo, Shaoxing, Zhejiang 311835 (CN)
(74) Representative: Zermani Biondi Orsi, Umberto
(86) International application number: PCT/CN2022/072129
(87) International publication number: WO 2022/193812

(57) **Abstract**

Provided is an electric valve, including a valve seat (10) and a valve needle (20), and the valve needle (20) is mounted in the valve seat (10); a valve core (30), which is mounted at an end of the valve seat (10), and the valve core (30) forms a valve opening; a driving assembly, which drives the valve needle (20) to axially move so as to open and close the valve opening; the valve core (30) is made of a non-metal material, an inner wall or an end face of the valve core (30) forms a sealing face, and the sealing face and an outer wall face of the valve needle (20) form a soft sealing structure. Through the soft sealing structure composed of the valve core (30) and the valve needle (20), the technical problem of poor sealing performance of the electric valve can be solved.

## Description

### Cross-Reference to Related Application

The disclosure claims priority to Chinese patent application No. 202110287924.4 filed to the China National Intellectual Property Administration on March 17, 2021 and entitled "Electric Valve" and claims priority to Chinese patent application No. 202120553724.4 filed to the China National Intellectual Property Administration on March 17, 2021 and entitled "Electric Valve".

### Technical Field

The disclosure relates to the technical field of electric valves, in particular to an electric valve.

### Background

At present, an electric valve in a related art includes a valve seat, a valve core and a valve needle, the valve needle is disposed in the valve seat, at least part of the valve core is inserted in the valve seat, and the valve needle and the valve core are both made of metal materials.

However, in actual use, leakage is likely to occur between the valve core and the valve needle, thereby causing a technical problem of poor sealing performance of the electric valve.

### Summary

An embodiment of the disclosure is to provide an electric valve, for solving the technical problem that an electric valve in the related art is poor in sealing performance.

In order to achieve the purpose, the disclosure provides an electric valve, including: a valve seat and a valve needle, the valve needle is mounted at one end of the valve seat, and the valve core forms a valve opening; a driving assembly, which drives the valve needle to axially move so as to open and close the valve opening; a valve core, which is mounted in the valve seat and sleeves the valve needle; the valve core is made of a non-metal material, the inner wall or the end face of the valve core forms a sealing face, and the sealing face and the outer wall face of the valve needle form a soft sealing structure.

Furthermore, the valve core is made of polytetrafluoroethylene material.

Furthermore, the valve seat is provided with a first mounting opening and a second mounting opening which are oppositely disposed along an axial direction and a communication channel which radially penetrates through the valve seat, the first mounting opening is located above the second mounting opening, the communication channel is disposed on a side wall of the valve seat and located between the first mounting opening and the second mounting opening, a cross-sectional area of the second mounting opening is larger than a cross-sectional area of the first mounting opening, and an appearance of the second mounting opening is matched with an appearance of the valve core, so that the valve core is mounted at the second mounting opening.

Furthermore, the valve seat is of an annular structure.

Furthermore, the sealing face is a conical face, the valve core is provided with a first end and a second end which are oppositely disposed, the first end is located above the second end, and a flow area of the sealing face is gradually reduced along an extending direction from the first end to the second end.

Furthermore, a balance channel is disposed in the valve needle to balance a pressure at two ends of the valve needle, and a first sealing element is disposed between the valve needle and the valve seat.

Furthermore, the electric valve further includes: a spring sleeve and a spring, a first end of the spring sleeve sleeves at an end part of the valve needle, and the spring is mounted in the spring sleeve; a screw rod disposed at a second end of the spring sleeve; and a bearing, which sleeves at the screw rod and is located between the screw rod and the spring sleeve.

Furthermore, the electric valve further includes: a valve core sleeve, at least part of the valve core sleeve is mounted in the second mounting opening, and the valve core sleeve is located at an end, far away from the valve needle, of the valve core.

Furthermore, the valve core sleeve includes: a main body portion, at least part of main body portion is inserted into the second mounting opening, and an end part of the main body portion abuts against an end part of the valve core; and a locating portion, which is disposed to protrude out of an outer wall of the main body portion and the locating portion is configured for abutting locating with an end part of the valve seat.

Furthermore, the locating portion is connected with the end part of the valve seat through welding.

Furthermore, the electric valve also includes a mounting base body, wherein the mounting base body is provided with a mounting channel, and the valve seat, the valve core and the valve core sleeve are all mounted in the mounting channel; wherein a second sealing element is disposed between the mounting base body and the valve seat; and/or a third sealing element is disposed between the mounting base body and the valve core sleeve.

Furthermore, the mounting base body is a valve body or a mounting table.

By adoption of the technical solution of the disclosure, the soft sealing structure is formed between the sealing face and the outer wall face of the valve needle, so that leakage between the valve core and the valve seat may be avoided through the soft sealing structure, and the sealing performance of the electric valve is improved. In an embodiment, the valve core is mainly made of a plastic material, so that after the valve core made of a non-metal material and the valve needle made of a metal material are mounted, the non-metal material is a soft material relative to the metal material, and thus, after a hard material and a soft material are mounted together, the sealing performance may be improved. In addition, since the valve core is made of a non-metal material, a soft sealing structure may also be formed between the valve core and the valve seat, so that the sealing performance of the electric valve may be better improved. Therefore, through the technical solution provided by the disclosure, the technical problem that the electric valve in the relevant art is poor in sealing performance is solved.

### Brief Description of the Drawings

The drawings forming a part of the disclosure in the specification are adopted to provide a further understanding to the disclosure. Schematic embodiments of the disclosure and descriptions thereof are adopted to explain the disclosure and not intended to form improper limits to the disclosure. In the drawings:
Fig. 1 illustrates a schematic structure diagram of a local structure of an electric valve provided by an embodiment of the disclosure.
Fig. 2 illustrates an exploded diagram of a local structure in Fig. 1.
Fig. 3 illustrates a schematic structure diagram of mounting of a screw rod, a bearing and a spring sleeve provided by an embodiment of the disclosure.
Fig. 4 illustrates a schematic structure diagram when a bearing sleeves a screw rod provided by an embodiment of the disclosure.
Fig. 5 illustrates a schematic structure diagram when the structure in Fig. 1 is mounted on a mounting base body.

The drawings include the following reference signs.

10. Valve seat; 20. Valve needle; 30. Valve core; 31. Sealing face; 41. First sealing element; 42. Second sealing element; 43. Third sealing element; 50. Spring sleeve; 60. Spring; 70. Screw rod; 80. Bearing; 90. Valve core sleeve; 91. Main body portion; 92. Locating portion; and 100. Mounting base body.

### Detailed Description of the Embodiments

It is to be noted that the embodiments and features in the embodiments of the disclosure may be combined with each other without conflict. The disclosure will be described in detail below with reference to the accompanying drawings and the embodiments.

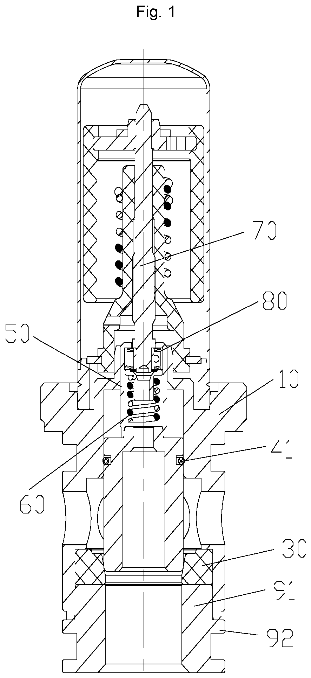

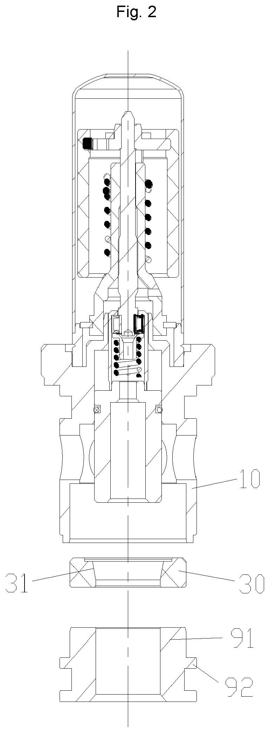

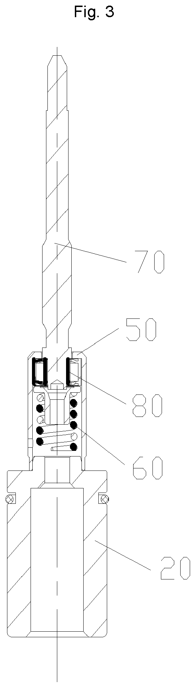

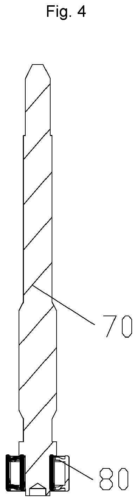

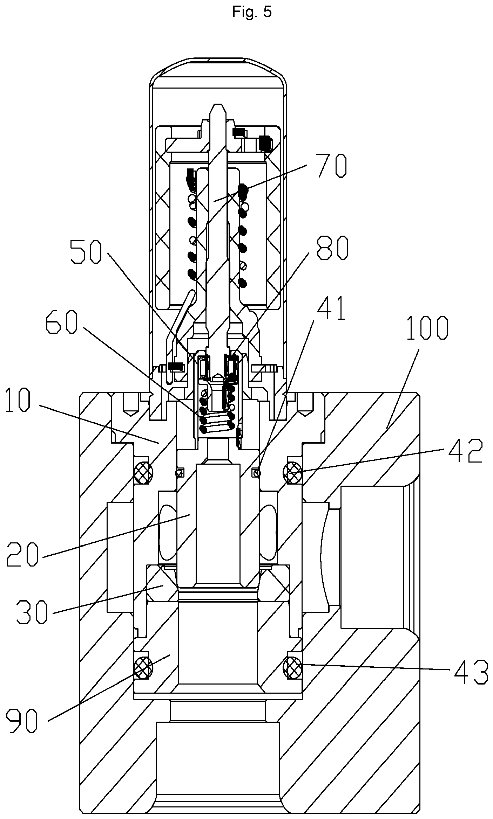

As shown in Figs. 1-5, the embodiments of the disclosure provide an electric valve, which includes a valve seat 10, a valve needle 20, a valve core 30 and a driving assembly, and the valve needle 20 is mounted in the valve seat 10. The valve core 30 is mounted in the valve seat 10 and mounted at an end of the valve seat 10. The valve core 30 sleeves the valve needle 20, the valve core 30 forms a valve opening, and specifically, a hollow structure of the valve core 30 forms the valve opening. The driving assembly drives the valve needle 20 to axially move so as to open and close the valve opening. The valve core 30 is made of a non-metal material, an inner wall or an end face (the end face may refer to an upper end face, or a lower end face, or an upper end face and a lower end face) of the valve core 30 forms a sealing face 31, and the sealing face 31 and an outer wall face of the valve needle 20 form a soft sealing structure.

By adoption of the structure arrangement, the soft sealing structure is formed between the sealing face 31 and the outer wall face of the valve needle 20, so that leakage between the valve core 30 and the valve seat 10 is avoided through the soft sealing structure, and the sealing performance of the electric valve is improved. Specifically, the valve core 30 in the embodiment is mainly made of a plastic material, so that after the valve core 30 made of a non-metal material and the valve needle 20 made of a metal material are mounted, the non-metal material is a soft material relative to the metal material, and thus, after a hard material and a soft material are mounted together, the sealing performance is improved. In addition, since the valve core 30 is made of a non-metal material, a soft sealing structure may also be formed between the valve core 30 and the valve seat 10, so that the sealing performance of the electric valve is better improved. Therefore, through the technical solution provided by the embodiment, the technical problem that the electric valve in the related art is poor in sealing performance is solved.

Specifically, the valve core 30 in the embodiment is made of polytetrafluoroethylene material, so that the sealing performance of the electric valve is better improved.

In some embodiments, the valve seat 10 is provided with a first mounting opening and a second mounting opening which are oppositely disposed along an axial direction, the valve seat 10 is further provided with a communication channel which radially penetrates through the valve seat 10, the first mounting opening is located above the second mounting opening, the communication channel is disposed on a side wall of the valve seat 10 and located between the first mounting opening and the second mounting opening, a cross-sectional area of the second mounting opening is larger than a cross-sectional area of the first mounting opening, and an appearance of the second mounting opening is matched with an appearance of the valve core 30, so that the valve core 30 is mounted at the second mounting opening. By adoption of the structure arrangement, during mounting, the valve core 30 is directly mounted from the second mounting opening, and the mounting operation is convenient. Since the valve core 30 is mounted from the second mounting opening, the valve core may be set to a large diameter to realize large flow circulation.

In some embodiments, the valve seat 10 is of an annular structure, and the valve seat 10 in the embodiment is of a circular ring structure.

In some embodiments, the sealing face 31 is a conical face, the valve core 30 is provided with a first end and a second end which are oppositely disposed, the first end is located above the second end, and a flow area of the sealing face 31 is gradually reduced along an extending direction from the first end to the second end. By adoption of the structure arrangement, the sealing performance between the valve core 30 and the valve needle 20 is improved, and leakage between the valve core 30 and the valve needle 20 is reduced.

In some embodiments, a balance channel is disposed in the valve needle 20 to balance the pressure at two ends of the valve needle 20, and a first sealing element 41 is disposed between the valve needle 20 and the valve seat 10, so that the sealing performance is better improved, and therefore, pressure balance at the upper and lower ends of the valve needle is realized in a valve closed state.

In some embodiments, the electric valve further includes a spring sleeve 50, a spring 60, a screw rod 70 and a bearing 80, a first end of the spring sleeve 50 sleeves at the end part of the valve needle 20, and the spring 60 is mounted in the spring sleeve 50. The screw rod 70 is disposed at a second end of the spring sleeve 50; and the bearing 80 sleeves the screw rod 70 and is located between the screw rod 70 and the spring sleeve 50. By adoption of the structure arrangement, since the bearing 80 is disposed between the screw rod 70 and the spring sleeve 50, the valve core 30 and the valve seat 10 are in soft sealing, so that the friction force between the valve core 30 and the screw rod 70 is smaller than that between the valve core 30 and the valve seat 10, thereby avoiding a wear problem of the soft sealing valve opening.

In some embodiments, the driving assembly of the electric valve includes a rotor assembly and a nut assembly, the rotor assembly sleeves at an outer side of the nut assembly, an end, away from the valve needle 20, of the screw rod 70 is fixedly connected with the rotor assembly, and the rotor assembly drives the valve needle 20 to move axially through the screw rod to adjust the opening of the valve opening. The nut assembly is provided with internal threads for threaded connection with the valve needle 20, and the nut assembly is fixedly connected with the valve seat 10 through a connector.

In some embodiments, the electric valve further includes a valve core sleeve 90, a part of the valve core sleeve 90 or all the valve core sleeve is mounted in the second mounting opening, and the valve core sleeve 90 is located at an end, far away from the valve needle 20, of the valve core 30. By adoption of the structure arrangement, an existing integrated structure of the valve seat 10 is changed into a split structure, thus facilitating mounting operation. Meanwhile, through the structure of the valve core sleeve 90, the valve core 30 can be conveniently located, so as to improve the disposing stability of the valve core 30, thereby improving an overall performance of the structure. In some embodiments, the valve core sleeve 90 can also sleeve outside the second mounting opening, as long as the valve core sleeve 90 and the valve needle 20 can be realized.

In some embodiments, the valve core sleeve 90 includes a main body portion 91 and a locating portion 92, at least part of the main body portion 91 is inserted into the second mounting opening, and the end part of the main body portion 91 abuts against the end part of the valve core 30. The locating portion 92 is disposed to protrude out of an outer wall of the main body portion 91 and is configured for abutting against the end part of the valve seat 10 to achieve location. By adoption of the structural arrangement, locating operation can be conveniently carried out on the valve core 30, thereby improving the disposing stability of the valve core 30.

In some embodiments, the main body portion 91 and the locating portion 92 are fixed together to form a whole structure, so as to facilitate production and manufacturing.

In some embodiments, the locating portion 92 is connected with the end part of the valve seat 10 through welding, thereby further improving the locating stability of the valve core 30, and also improving the disposing stability of the valve core sleeve 90.

In some embodiments, the electric valve further includes a mounting base body 100, which is provided with a mounting channel, and the valve seat 10, the valve core 30 and the valve core sleeve 90 are all mounted in the mounting channel. A second sealing element 42 can be disposed between the mounting base body 100 and the valve seat 10. Or, a third sealing element 43 can be disposed between the mounting base body 100 and the valve core sleeve 90. Or, a second sealing element 42 can be disposed between the mounting base body 100 and the valve seat 10, and a third sealing element 43 is disposed between the mounting base body 100 and the valve core sleeve 90.

In some embodiments, a second sealing element 42 is disposed between the mounting base body 100 and the valve seat 10, and a third sealing element 43 is disposed between the mounting base body 100 and the valve core sleeve 90. By adoption of the structural arrangement, the sealing performance of the electric valve is better improved.

In the embodiments, the mounting base body 100 is a valve body or a mounting table, and the specific mounting situation can be determined according to actual use.

The valve core 30 in the embodiment is made of a soft sealing material, so that the problem of leakage can be solved. The valve assembly is an inverted structure, that is, the valve core 30 is assembled from the bottom up, so as to realize large flow and internal balance (convenient for opening the valve), the structure of the valve seat is of a split structure (the structure of the valve seat includes a valve seat and a valve core sleeve, the valve seat and the valve core sleeve are two parts to form the split structure), and through the disposing of the valve seat 10, the valve core 30 and valve core sleeve 90, the problem of leakage of the valve opening is solved. In some embodiments, the valve core 30 is of a large-diameter structure, and there is basically no relative operation between the valve core 30 and the valve needle 20, so that the friction between the valve core 30 and the valve needle 20 is reduced, and wear of the soft sealing material, namely, the valve core 30 is prevented.

From the above description, it can be seen that the above embodiments of the disclosure achieve the following technical effects: leakage is reduced, and the sealing effect of the electric valve is improved.

It is to be noted that terms used herein are for the purpose of describing specific implementation modes only and are not intended to be limiting of exemplary implementation modes according to the disclosure. Unless otherwise pointed out explicitly, a singular form used herein is also intended to include a plural form. In addition, it should also be understood that the term "include" and/or "comprise" used in the description indicates that there are features, steps, operations, devices, assemblies and/or combinations thereof.

Unless otherwise specified, relative arrangements of components and steps elaborated in these embodiments, numeric expressions and numeric values do not limit the scope of the disclosure. Furthermore, it should be understood that for ease of descriptions, the size of each part shown in the drawings is not drawn in accordance with an actual proportional relation. Technologies, methods and devices known by those of ordinary skill in the related art may not be discussed in detail. However, where appropriate, the technologies, the methods and the devices shall be regarded as part of the authorized description. In all examples shown and discussed herein, any specific values shall be interpreted as only exemplar values instead of limited values. Therefore, other examples of the exemplary embodiments may have different values. It is to be noted that similar marks and letters represent similar items in the following drawings. As a result, once a certain item is defined in one drawing, it is unnecessary to further discus the certain item in the subsequent drawings.

In the descriptions of the disclosure, it will be appreciated that locative or positional relations indicated by "front, back, up, down, left, and right", "horizontal, vertical, perpendicular, and horizontal", "top and bottom" and other terms are locative or positional relations shown on the basis of the drawings, which are only intended to make it convenient to describe the disclosure and to simplify the descriptions without indicating or impliedly indicating that the referring device or element must have a specific location and must be constructed and operated with the specific location, unless otherwise stated, and accordingly it cannot be understood as limitations to the disclosure. The nouns of locality "inner and outer" refer to the inner and outer contours of each component.

For ease of description, spatial relative terms such as "over", "above", "on an upper surface" and "upper" may be used herein for describing a spatial position relation between a device or feature and other devices or features shown in the drawings. It will be appreciated that the spatial relative terms aim to contain different orientations in usage or operation besides the orientations of the devices described in the drawings. For example, if the devices in the drawings are inverted, devices described as "above other devices or structures" or "over other devices or structures" will be located as "below other devices or structures" or "under other devices or structures". Thus, an exemplar term "above" may include two orientations namely "above" and "below". As an alternative, the device may be positioned with other different modes (90° rotation or positioned at other orientations), and the spatial relative description used here needs to be explained correspondingly.

In addition, it is to be noted that terms "first", "second" and the like are used to limit parts, and are only intended to distinguish corresponding parts. If there are no otherwise statements, the above terms do not have special meanings, such that they cannot be understood as limits to the scope of protection of the disclosure.

The foregoing is some embodiments of the disclosure and is not intended to limit the disclosure, and various modifications and variations of the disclosure may be available for those skilled in the art. Any modifications, equivalent replacements, improvements and the like made within the spirit and principle of the disclosure shall fall within the scope of protection of the disclosure.

## Claims

1. An electric valve, comprising:
a valve seat (10) and a valve needle (20), wherein the valve needle (20) is mounted in the valve seat (10);
a valve core (30), which is mounted at an end of the valve seat (10), and the valve core (30) forms a valve opening;
a driving assembly, which drives the valve needle (20) to axially move so as to open and close the valve opening;
wherein the valve core (30) is made of a non-metal material, an inner wall or an end face of the valve core (30) forms a sealing face (31), and the sealing face (31) and an outer wall face of the valve needle (20) form a soft sealing structure.

2. The electric valve as claimed in claim 1, wherein the valve core (30) is made of polytetrafluoroethylene material.

3. The electric valve as claimed in claim 1, wherein the valve seat (10) is provided with a first mounting opening and a second mounting opening which are oppositely disposed along an axial direction and a communication channel which radially penetrates through the valve seat (10), the first mounting opening is located above the second mounting opening, the communication channel is disposed on a side wall of the valve seat and located between the first mounting opening and the second mounting opening, a cross-sectional area of the second mounting opening is larger than a cross-sectional area of the first mounting opening, and an appearance of the second mounting opening is matched with an appearance of the valve core (30), so that the valve core (30) is mounted at the second mounting opening.

4. The electric valve as claimed in claim 1, wherein the valve seat (10) is of an annular structure.

5. The electric valve as claimed in claim 1, wherein the sealing face (31) is a conical face, the valve core (30) is provided with a first end and a second end which are opposite, the first end is located above the second end, and a flow area of the sealing face (31) is gradually reduced along an extending direction from the first end to the second end.

6. The electric valve as claimed in claim 1, wherein a balance channel is disposed in the valve needle (20) to balance a pressure at two ends of the valve needle (20), and a first sealing element (41) is disposed between the valve needle (20) and the valve seat (10).

7. The electric valve as claimed in claim 1, further comprising:
a spring sleeve (50);
a spring (60), a first end of the spring sleeve (50) sleeves at an end part of the valve needle (20), and the spring (60) is mounted in the spring sleeve (50);
a screw rod (70) disposed at a second end of the spring sleeve (50); and
a bearing (80), which sleeves at the screw rod (70) and is located between the screw rod (70) and the spring sleeve (50).

8. The electric valve as claimed in claim 3, further comprising:
a valve core sleeve (90), at least part of the valve core sleeve (90) is mounted in the second mounting opening, and the valve core sleeve (90) is located at an end, far away from the valve needle (20), of the valve core (30).

9. The electric valve as claimed in claim 8, wherein the valve core sleeve (90) comprises:
a main body portion (91), at least part of the main body portion (91) is inserted into the second mounting opening, and an end part of the main body portion (91) abuts against an end part of the valve core (30);
a locating portion (92), which is disposed to protrude out of an outer wall of the main body portion (91), and the locating portion (92) is configured for abutting locating with an end part of the valve seat (10).

10. The electric valve as claimed in claim 9, wherein the locating portion (92) is connected with the end part of the valve seat (10) through welding.

11. The electric valve as claimed in claim 8, further comprising a mounting base body (100), wherein the mounting base body (100) is provided with a mounting channel, and the valve seat (10), the valve core (30) and the valve core sleeve (90) are all mounted in the mounting channel; wherein
a second sealing element (42) is disposed between the mounting base body (100) and the valve seat (10); and/or
a third sealing element (43) is disposed between the mounting base body (100) and the valve core sleeve (90).
